# EUROPÄISCHE PATENTSCHRIFT

(11) **EP 1 557 308 B1**
(45) Veröffentlichungstag und Bekanntmachung des Hinweises auf die Patenterteilung: **04.08.2010**
(21) Anmeldenummer: 05100305.1
(22) Anmeldetag: 19.01.2005
(51) Int. Cl.: B60H 1/00

(54) **Vorrichtung zum Kühlen von Luft für einen einem Fahrzeug zugeordneten Raum und Fahrzeug mit einer solchen Vorrichtung**
Device for cooling air for a vehicle space and a vehicle including such a device
Dispositif pour le refroidissement d'air d'un espace de véhicule et un véhicule avec un tel dispositif

(30) Priorität: 21.01.2004 DE 102004003237
(43) Veröffentlichungstag der Anmeldung: 27.07.2005
(73) Patentinhaber: DEERE & COMPANY, Moline, Illinois 61265-8098 (US)
(72) Erfinder: Höfle, Jörg-Jens, 64342 Seeheim-Jugenheim (DE); Dietrich, Gunnar, 68199 Mannheim (DE)
(74) Vertreter: Holst, Sönke

(56) Entgegenhaltungen:
- EP-A- 1 342 598
- DE-A1-102004 051 136
- US-A- 6 161 609

## Beschreibung

Die Erfindung betrifft eine Vorrichtung zum Kühlen von Luft für einen einem Fahrzeug zugeordneten Raum, insbesondere einer Kabine eines landwirtschaftlichen oder industriellen Nutzfahrzeugs. Die Vorrichtung umfasst einen Kompressor und/oder einen Verdampfer, einen Kondensator, eine Luftleiteinrichtung und Verbindungsleitungen. Der Kondensator ist mit dem Kompressor bzw. dem Verdampfer mit Hilfe der Verbindungsleitungen verbindbar. Mit der Luftleiteinrichtung ist Luft zum Kühlen des Kondensators dem Kondensator zuleitbar.

Derartige Vorrichtungen sind seit langem aus dem Stand der Technik - beispielsweise als Klimaanlagen - bekannt und werden bei Personenkraftwagen aber auch bei Lastkraftwagen und landwirtschaftlichen Nutzfahrzeugen eingesetzt. Bei solchen Vorrichtungen wird üblicherweise der Wärmetransport mit Hilfe eines Kältemittels bewerkstelligt, das seinen Aggregatzustand, beispielsweise von flüssig in dampfförmig und umgekehrt, ändert, und dabei Wärme aufnimmt oder abgibt. In dem zumeist in einer Fahrzeugkabine angeordneten Verdampfer geht das Kältemittel vom flüssigen in den gasförmigen Zustand über und nimmt hierbei Wärme auf, welche sie der unmittelbaren Umgebung - das heißt der Fahrzeugkabine - entzieht. Mit Hilfe des Kompressors bzw. des Verdichters wird das verdampfte Kältemittel komprimiert bzw. verdichtet, so dass es im Kondensator wieder in den flüssigen Aggregatzustand übergehen - kondensieren - kann, wobei Wärme entsteht. Diese Wärme wird von dem Kondensator üblicherweise an die Luft der Umgebung abgegeben. Grundsätzlich kann die Klimaanlage auch mit R152a oder CO2 als Kühlmedium betrieben werden, was für sich gesehen und ebenfalls aus dem Stand der Technik bekannt ist. Für den Fall, dass CO2 als Kühlmedium verwendet wird, wird der Kondensator als Gaskühler bezeichnet.

Der Kondensator ist üblicherweise im Bereich des Fahrzeugkühlers angeordnet, wo mit Hilfe eines Lüfters Luft aus der Umgebung einerseits durch den Kondensator und andererseits durch den Fahrzeugkühler gezogen wird, wobei die im Kondensator entstehende Wärme an die Luft abgegeben werden kann.

Nun kann es - beispielsweise aufgrund einer Neukonstruktion der Fahrzeugkühlung mit erhöhtem Leistungsvermögen - jedoch sein, dass der Anbauraum im Bereich des Fahrzeugkühlers limitiert ist, so dass zur Unterbringung des Kondensators unter Umständen eine völlig neue Planung des Fahrzeugkühlerbereichs bzw. des Motorbereichs erforderlich ist. Dies kann unter Umständen zu einer Motorhaube größerer Dimension führen, wodurch die Sicht für den Fahrer unter Umständen über einen größeren Winkelbereich eingeschränkt werden kann.

Eine Vorrichtung zum Kühlen von Luft für einen einem Fahrzeug zugeordneten Raum gemäß den Merkmalen des Oberbegriffs von Anspruch 1 ist beispielsweise aus der EP 1 342 598 A1 bekannt.

Der vorliegenden Erfindung liegt daher die Aufgabe zugrunde, eine Vorrichtung und ein Fahrzeug der eingangs genannten Art anzugeben und weiterzubilden, durch welche die vorgenannten Probleme überwunden werden. Insbesondere soll ohne wesentliche Vergrößerung der Ausmaße der Motorhaube eine Möglichkeit gefunden werden, den Kondensator entsprechend auszubilden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Vorrichtung der eingangs genannten Art dadurch gekennzeichnet, dass der Kondensator in räumlicher Nähe zu dem Raum angeordnet ist.

Erfindungsgemäß ist erkannt worden, dass eine neue Planung bzw. Konstruktion des Motorbereichs und einem damit verbundenen Neudesign der Motorhaube nicht erforderlich ist, wenn der Kondensator eben nicht wie bisher am Motorkühler angeordnet ist. In erfindungsgemäßer Weise ist nämlich der Kondensator sozusagen nicht mehr unter der Motorhaube angeordnet, sondern nahe dem dem Fahrzeug zugeordneten Raum, mit anderen Worten beispielsweise nahe der Fahrzeugkabine. Durch diese Anordnung können in ganz besonders vorteilhafter Weise kurze Wege der Verbindungsleitungen zwischen Verdampfer und Kondensator realisiert werden, so dass die Herstellungskosten verringert werden können.

In der bevorzugten Ausführungsform weist der Kondensator zumindest abschnittsweise eine im Wesentlichen prismenförmige, quaderförmige oder zylindrische Form auf, wobei eine Rohrform denkbar ist. Bevorzugt ist der Kondensator hohlzylindrisch ausgebildet, wobei in diesem Fall nicht nur der äußere Bereich des Hohlzylinders, sondern auch der innere Bereich des Hohlzylinders von Luft umströmt bzw. durchströmt werden kann, so dass hierdurch eine Kühlung erfolgen kann. Ganz besonders bevorzugt ist der Kondensator im Wesentlichen vertikal angeordnet. Gerade in diesem Fall könnte eine längliche Form des Hohlzylinders vorgesehen sein, so dass der Kondensator bei einer kabinennahen Anordnung dem Erscheinungsbild eines Auspuffrohrs ähnelt. Der Kondensator könnte auch bezüglich seiner Längsachse unter einem Winkel zur Vertikalen von kleiner 45 Grad angeordnet sein. Es ist auch denkbar, dass mehrere quaderförmig ausgebildete Kondensatoren - beispielsweise drei - miteinander verbunden sind und/oder jeweils leicht verkippt angeordnet sind, d.h. unter einem Winkel zur Vertikalen.

Der Kondensator weist zumindest abschnittsweise im Wesentlichen eine hohlzylindrische Form mit mehreren in radialer Richtung verlaufenden Kanälen auf. Die Kanäle verbinden den Innenbereich des hohlzylindrischen Kondensators mit dem Außenbereich des hohlzylindrischen Kondensators. Die zur Kühlung des Kondensators vorgesehene Luft ist von der Luftleiteinrichtung dem äußeren oder dem inneren Bereich des Kondensators zuführbar. Zumindest ein Teil der dem äußeren bzw. dem inneren Bereich zugeführten Luft ist durch die Kanäle hindurch in den inneren bzw. den äußeren Bereich des Hohlzylinders förderbar und davon abführbar. Insoweit kann durch diese Ausgestaltung des Kondensators eine einem Ringkühler bzw. einem Ringkondensator vergleichbare Konfiguration realisiert werden, welche in vorteilhafter Weise einen hohen Wirkungsgrad aufweist.

In einer weiteren Ausführungsform könnte vorgesehen sein, dass der Kondensator im Wesentlichen eine längliche Form aufweist. Der so ausgestaltete Kondensator könnte in seiner Längsrichtung von Luft umströmt werden, so dass hierdurch ein Wärmeaustausch gegeben ist. Der Kondensator könnte weiterhin Kanäle aufweisen, welche sich in Richtung der Längsachse oder einer Querachse des Kondensators erstrecken und durch welche Luft leitbar ist. Somit ist auch aufgrund des Luftstroms durch die Kanäle ein Wärmeaustausch gegeben. Der Kondensator könnte in seiner Längsrichtung eine gekrümmte Form aufweisen, nämlich insbesondere dann, wenn er an die Form eines Bauteils an seinem Anbauort anzupassen ist.

Nun könnte der Kondensator in einem zumindest abschnittsweise im Wesentlichen zylindrisch, quader- oder prismenförmig ausgebildeten Gehäuse angeordnet sein. Vorzugsweise bildet das Gehäuse einen Teil der Luftleiteinrichtung, so dass durch das Gehäuse beziehungsweise die Luftleiteinrichtung die Effektivität der Luftumströmung bzw. Luftdurchströmung des Kondensators weiter gesteigert werden kann.

In einer bevorzugten Ausführungsform weist das Gehäuse eine Gehäuselängsachse auf. Auch ein Kondensator weist eine Kondensatorlängsachse auf. Es ist mindestens ein Kondensator im Gehäuse derart angeordnet, dass die beiden Längsachsen einen Winkel einschließen, der kleiner als 90 Grad ist. Mit anderen Worten ist der Kondensator bzw. sind mehrere Kondensatoren bezogen auf das Gehäuse darin leicht verkippt zur Vertikalen angeordnet. Eine Durchströmung eines solchen Kondensators mit Luft könnte in diesem Fall in einer Richtung quer zu seiner Längsachse erfolgen.

Der Kondensator könnte im Wesentlichen in horizontaler Richtung oder quer zu seiner Längsachse von Luft durchströmbar sein. Hierzu könnte mindestens eine Lüftereinrichtung vorgesehen sein, mit welcher Luft durch einen Teil des Kondensators leitbar ist. Eine solche Lüftereinrichtung könnte in Form eines Gebläses ausgebildet sein und dem Kondensator unmittelbar vor- oder nachgeordnet sein, um dementsprechend Luft durch den Kondensator zu blasen oder zu saugen.

Ganz besonders bevorzugt ist eine Lüftereinrichtung vorgesehen, welche Luft ansaugt und mittels der Luftleiteinrichtung zum Kondensator befördert. Die Lüftereinrichtung könnte im einfachsten Fall in Form eines Ventilators bzw. eines Lüfters ausgebildet sein. Vorzugsweise handelt es sich bei der angesaugten Luft um von der Umgebung kommende Luft.

Der Anbauort der Lüftereinrichtung könnte stromaufwärts und/oder an dem oberen Ende des im Wesentlichen vertikal angeordneten Kondensators vorgesehen sein. Dementsprechend könnte die Lüftereinrichtung Umgebungsluft ansaugen und aufgrund des hierdurch erzeugten Überdrucks die Luft am Kondensator vorbeidrücken bzw. hindurchdrücken. Grundsätzlich kann eine Lüftereinrichtung "ziehend" oder "drückend" eingesetzt werden, und dementsprechend Luft aufgrund von Unterdruck oder Überdruck transportieren. Somit könnte eine Lüftereinrichtung auch derart angeordnet und betrieben werden, dass aufgrund eines von der Lüftereinrichtung erzeugten Unterdrucks die Luft an dem Kondensator vorbeigezogen wird.

Grundsätzlich könnte das Gehäuse zu Reinigungs- und/oder Wartungszwecken eine beispielsweise in Form einer Klappe ausgeführte Öffnung aufweisen, durch welche auf die Komponenten in dem Gehäuse zugegriffen werden kann. Bevorzugt ist jedoch vorgesehen, dass das Gehäuse zumindest abschnittsweise zwei- oder mehrgeteilt ausgebildet ist und zur einfachen Zugänglichkeit öffenbar und verschließbar ausgebildet ist. Mit anderen Worten kann das Gehäuse derart ausgebildet werden, dass ein Gehäuseteil abnehmbar, aufschwenkbar oder abklappbar an dem anderen Gehäuseteil befestigbar ist. Eine Zweiteilung ist vorzugsweise entlang der Gehäuselängsrichtung vorgesehen.

An einem Gehäuseteil könnte mindestens eine Lüftereinrichtung und an einem anderen Gehäuseteil mindestens ein Kondensator befestigt sein. So könnten beispielsweise zwei Lüftungseinrichtungen vorgesehen sein, welche in Luftströmungsrichtung vor und nach dem Kondensator angeordnet sind. Wenn nun das eine Gehäuseteil geöffnet bzw. aufgeklappt wird, an welchem auch die Lüftungseinrichtungen angebracht sind, klappen die Lüftungseinrichtungen zusammen mit diesem Gehäuseteil auf und bewegen sich zusammen mit dem Gehäuseteil vom Kondensator weg. Der an dem anderen Gehäuseteil angeordnete Kondensator verbleibt ortsfest an dem anderen Gehäuseteil, so dass sowohl die Lüftungseinrichtungen als auch der Kondensator separat und einfach zugänglich sind.

Zur Erhöhung der Effizienz der Umströmung bzw. Durchströmung von Luft durch den bzw. die Kondensatoren ist in einer bevorzugten Ausführungsform in Luftströmungsrichtung einer Lüftereinrichtung ein Kondensator nachgeordnet. Vorzugsweise sind mehrere Lüftereinrichtungen und mehrere Kondensatoren vorgesehen, welche alternierend hintereinander angeordnet sind.

Der Kondensator samt gegebenenfalls vorgesehenem Gehäuse könnte an einem - in Fahrtrichtung des Fahrzeugs gesehenen - vorderen und/oder seitlichen Anbauort angeordnet sein. Vorzugsweise ist er in unmittelbarer Nähe zu einem A-Pfosten des in Form einer Kabine ausgebildeten Raums angeordnet. Bei einer solchen Anordnung des Kondensators kann die Beeinträchtigung der Sicht des in der Kabine befindlichen Bedieners gering gehalten werden. Dies kann vor allem dann der Fall sein, wenn der Kondensator von einer Motorhaube nach außen abragend angeordnet ist, insbesondere bei einer im Wesentlichen vertikalen Anordnung des Kondensators samt gegebenenfalls vorgesehenen Kondensatorgehäuse.

Insbesondere bei landwirtschaftlichen Nutzfahrzeugen kann die von der Umgebung angesaugte Luft verunreinigt sein, beispielsweise durch Staub oder in der Luft schwebende kleine Stroh- bzw. Ernteteile. Dementsprechend wäre ein von dieser Luft umströmter bzw. durchströmter Kondensator höchstwahrscheinlich nach einer kurzen Betriebsdauer zugesetzt, so dass seine Funktion in Frage gestellt ist. Daher ist eine Filtereinrichtung vorgesehen, mit welcher eventuell verunreinigte Umgebungsluft zumindest teilweise reinigbar ist. Die Filtereinrichtung könnte beispielsweise Turbulatorröhrchen aufweisen, welche nach dem Zyklonenprinzip arbeiten.

Hinsichtlich eines Fahrzeugs wird die eingangs genannte Aufgabe durch die Merkmale des Patentanspruchs 13 gelöst. Hiernach ist ein Fahrzeug durch eine Vorrichtung zum Kühlen von Luft für einen dem Fahrzeug zugeordneten Raum nach einem der Ansprüche 1 bis 12 gekennzeichnet. Ganz besonders bevorzugt handelt es sich bei dem Fahrzeug um ein landwirtschaftliches oder industrielles Nutzfahrzeug, insbesondere um einen Traktor. Hinsichtlich der Vorrichtung zum Kühlen von Luft wird zur Vermeidung von Wiederholungen auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: in einer Seitenansicht ein erfindungsgemäßes Ausführungsbeispiel,
- Fig. 2: in einer perspektivischen Ansicht einen Kondensator aus dem Ausführungsbeispiel gemäß Figur 1,
- Fig. 3: in einer seitlichen Schnittansicht ein weiteres Ausführungsbeispiel einer Kondensatoranordnung,
- Fig. 4: in einer Draufsicht die Kondensatoranordnung aus Figur 3 in einem ersten Zustand,
- Fig. 5: in einer Draufsicht die Kondensatoranordnung aus Figur 3 in einem zweiten Zustand und
- Fig. 6: in einer Querschnittsdarstellung ein weiteres Ausführungsbeispiel der vorliegenden Erfindung.

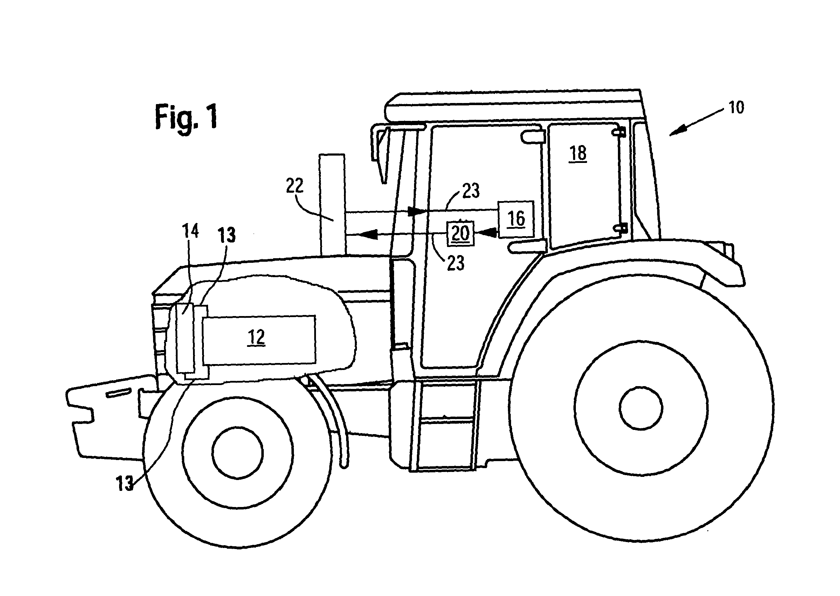

Figur 1 zeigt schematisch ein in Form eines Traktors 10 ausgeführtes landwirtschaftliches Nutzfahrzeug, welches mit der erfindungsgemäßen Vorrichtung zum Kühlen von Luft ausgestattet ist. Der Traktor wird von dem Verbrennungsmotor 12 angetrieben, welcher von einem lediglich schematisch dargestellten Hochtemperaturkühlkreislauf 13 gekühlt wird, welcher einen Kühler 14 aufweist.

Die Vorrichtung zum Kühlen von Luft umfasst einen Verdampfer 16, welcher in der Fahrzeugkabine 18 des Traktors 10 angeordnet ist. Das in der Vorrichtung zirkulierende Kühlmittel verdampft in dem Verdampfer 16 und entzieht der Fahrzeugkabine 18 hierbei Wärme. Das Kühlmittel wird von dem Kompressor 20 komprimiert und kondensiert in dem Kondensator 22. Die hierbei entstehende Wärme kann an die Umgebungsluft abgegeben werden. Das Kühlmittel wird in seinem Kreislauf in den schematisch dargestellten Verbindungsleitungen 23 geleitet.

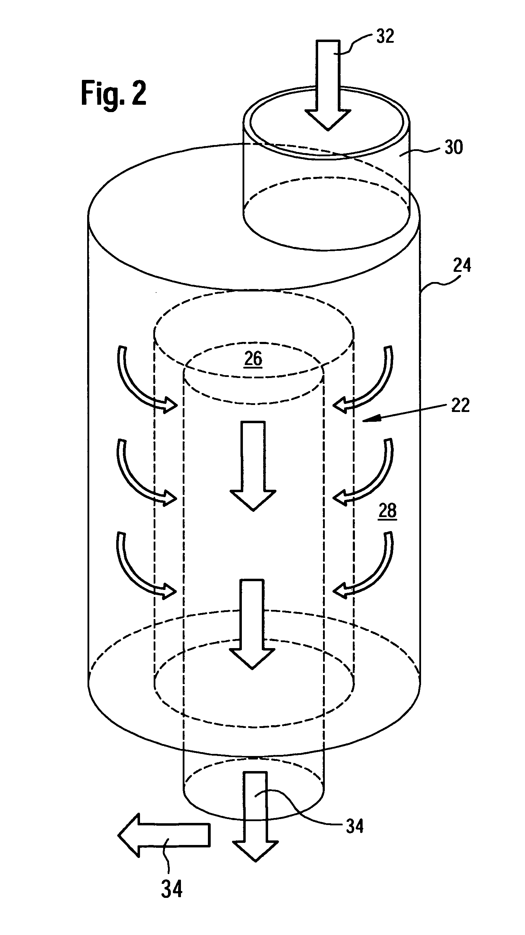

Figur 2 zeigt lediglich schematisch einen hohlzylindrisch ausgebildeten Kondensator 22, welcher in einem im Wesentlichen zylindrisch ausgebildeten Gehäuse 24 angeordnet ist. Der in Figur 2 gezeigte Kondensator 22 umfasst mehrere - nicht gezeigte - in radialer Richtung verlaufende Kanäle, welche den Innenbereich 26 mit dem Außenbereich 28 des Kondensators 22 verbinden. Das Gehäuse 24 bildet einen Teil der Luftleiteinrichtung, mit welcher Luft der Umgebung dem Kondensator 22 zugeleitet wird. Die Lüftereinrichtung 30 saugt von der Umgebung Luft an, was schematisch mit dem Pfeil 32 angedeutet ist, und leitet die angesaugte Luft in den Außenbereich 28 des Kondensators 22, das heißt in den Zwischenraum zwischen Gehäuse 24 und Kondensator 22. Die in dem Außenbereich 28 befindliche Luft gelangt durch die in Figur 2 nicht gezeigten radial verlaufenden Kanäle in den Innenbereich 26 des Kondensators 22 und wird aus diesem Bereich abgeführt, was mit den Pfeilen mit dem Bezugszeichen 34 schematisch angedeutet ist.

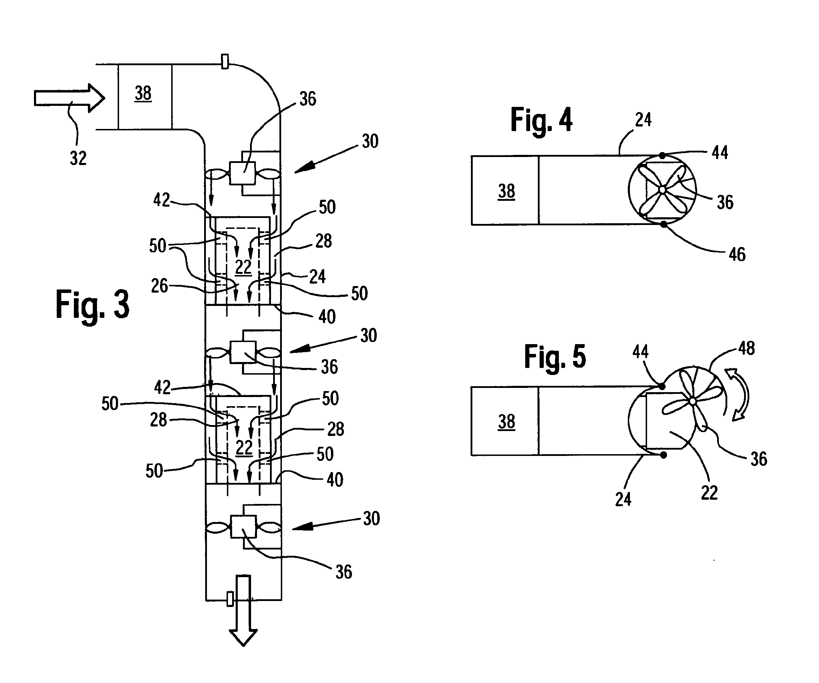

Figur 3 zeigt in einer seitlichen Schnittansicht in einer schematischen Darstellung eine zur Figur 2 alternativen Ausführungsform eines Gehäuses 24, in welchem zwei Kondensatoren 22 sowie eine drei Lüfter 36 aufweisende Lüftereinrichtung 30 angeordnet sind. Hierbei wird mit Hilfe der Lüfter 36 Luft aus der Umgebung gemäß der Pfeilrichtung 32 angesaugt und von einem Filter 38 zumindest grob gereinigt. Die in Figur 3 gezeigten Kondensatoren 22 weisen ebenfalls eine hohlzylindrische Form auf und sind bezüglich des Kühlmittelflusses in Serie bzw. hintereinander geschaltet.

Die Funktionsweise stellt sich wie folgt dar: die vom Filter 38 vorgereinigte und von dem in Strömungsrichtung zuerst angeordneten Lüfter 36 angesaugte Luft wird in den äußeren Bereich 28 des ersten hohlzylindrisch ausgebildeten Kondensators 22 geleitet. Dieser erste äußere Bereich 28 ist stromabwärts durch die Ringblende 40 begrenzt, so dass die unter Druck stehende Luft durch die radial verlaufenden Kanäle 50 des Kondensators 22 in den Innenbereich 26 des Kondensators 22 geleitet wird. Von dort aus wird die Luft, unterstützt von dem in Strömungsrichtung angeordneten zweiten Lüfter 36, in den Außenbereich 28 des in Strömungsrichtung angeordneten weitere Kondensators 22 geleitet. Auch dieser Außenbereich 28 ist durch eine in Strömungsrichtung angeordnete zweite Ringblende 40 begrenzt, so dass die dort unter Druck stehende Luft ebenfalls durch die radialen Kanäle 50 des Kondensators 22 in den Innenbereich des Kondensators 28 geleitet wird. Schließlich wird der dort ankommende Luftstrom, unterstützt von dem in Strömungsrichtung dritten angeordneten Lüfter 36, aus dem in Figur 3 gezeigten Gehäuse abgeleitet. Der Innenbereich 26 der beiden in Figur 3 gezeigten Kondensatoren 22 ist jeweils mit einer Abdeckplatte 42 abgedichtet, so dass die von oben kommende, unter Druck stehende Luft nicht unmittelbar in den Innenbereich 26 der Kondensatoren 22 gelangt, sondern nur über den Umweg jeweils über den Außenbereich 28 und die in radialer Richtung verlaufenden Kanäle 50 des Kondensators 22.

Alternativ zu den in radialer Richtung arbeitenden, in Form von Ringkühlern ausgebildeten Kondensatoren 22 könnten auch ein oder zwei in axialer Richtung arbeitende Kondensatoren vorgesehen sein, welche im Wesentlichen zylinder-, quader- oder prismenförmig ausgebildet sind und durch welche die Luft in Richtung der Zylinderachse geleitet wird.

Figur 4 zeigt in einer Draufsicht in einer schematischen Darstellung das Gehäuse 24, in welchem der Filter 38, die Lüfter 36 sowie die Kondensatoren 22 angeordnet sind. Entlang der Längsrichtung des Gehäuses 24 ist ein Scharnier 44 vorgesehen. Auf der gegenüberliegenden Seite des im Wesentlichen zylindrisch angeordneten Gehäuseabschnitts 24 sind Verschlussmittel 46 vorgesehen, mit welchen das Gehäuse 24 öffenbar bzw. schließbar ist. In Figur 4 ist das Gehäuse 24 in einem geschlossenen Zustand gezeigt. In Figur 5 ist das Gehäuse 24 aus Figur 4 in der gleichen Ansicht in einem geöffneten Zustand gezeigt, wobei das Gehäuseteil 48 bezüglich des Scharniers 44 abgeklappt ist, so dass sowohl die Lüfter 36 als auch die Kondensatoren 22 zu Wartungs-/Reinigungszwecken auf einfache Art und Weise zugänglich sind. In Figur 5 ist ebenfalls gezeigt, dass die Lüfter 36 an dem abklappbaren Gehäuseteil 48 und die Kondensatoren 22 an dem ortsfest angeordneten Gehäuseteil 24 befestigt sind.

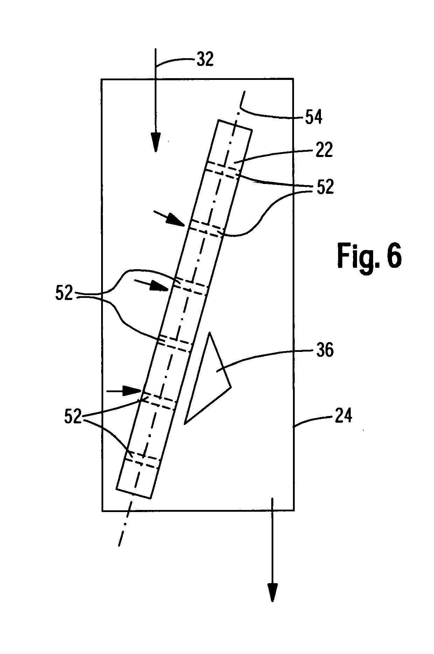

Figur 6 zeigt eine alternative Anordnung des Kondensators 22 in dem Gehäuse 24. Der Einfachheit halber ist in Figur 6 lediglich der Teil des Gehäuses 24 dargestellt, welches den Kondensator 22 aufnimmt. Auch hier wird die von der in Figur 6 nicht gezeigten Lüftereinrichtung angesaugte Umgebungsluft 32 von oben in das Gehäuse 24 geleitet. Der in dem Gehäuse 24 angeordnete Kondensator 22 weist eine Längsachse 54 auf. Das Gehäuse 24 weist ebenfalls eine zu Pfeil 32 parallele - nicht eingezeichnete - Längsachse auf. Der Kondensator 22 ist derart im Gehäuse 24 angeordnet, dass seine Längsachse 54 einen Winkel zur Längsachse des Gehäuses 24 aufweist. Die von oben in das Gehäuse 24 eingeleitete Luft wird quer zur Längsachse 54 des Kondensators 22 - mit den Pfeilen angedeutet - durch den Kondensator 22 geleitet, welcher hierzu entsprechende Kanäle 52 aufweist. Es ist ein weiterer Lüfter 36 stromabwärts des Kondensators 22 vorgesehen, welcher einen kontinuierlichen Luftstrom durch den Kondensator 22 unterstützt.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zum Kühlen von Luft für einen einem Fahrzeug zugeordneten Raum, insbesondere einer Kabine eines landwirtschaftlichen oder industriellen Nutzfahrzeugs, mit einem Kompressor (20) und/oder einem Verdampfer (16), einem Kondensator (22), einer Luftleiteinrichtung (24) und Verbindungsleitungen (23), wobei der Kondensator (22) mit dem Kompressor (20) bzw. dem Verdampfer (16) mit Hilfe der Verbindungsleitungen (23) verbindbar ist, wobei mit der Luftleiteinrichtung (24) Luft zum Kühlen des Kondensators (22) dem Kondensator (22) zuleitbar ist, wobei der Kondensator (22) in räumlicher Nähe zu dem Raum (18) angeordnet ist, wobei der Kondensator (22) zumindest abschnittsweise eine im Wesentlichen prismenförmige, quaderförmige oder zylindrische Form aufweist, und wobei der Kondensator (22) im Wesentlichen vertikal oder bezüglich seiner Längsachse unter einem Winkel zur Vertikalen von kleiner als 45 Grad angeordnet ist, **dadurch gekennzeichnet, dass** der Kondensator (22) zumindest abschnittsweise im Wesentlichen eine hohlzylindrische Form mit mehreren in radialer Richtung verlaufenden Kanälen (50, 52) aufweist, wobei die Kanäle (50, 52) einen Innenbereich (26) des hohlzylindrischen Kondensators (22) mit einem Außenbereich (28) des hohlzylindrischen Kondensators (22) verbinden, wobei die zur Kühlung des Kondensators (22) vorgesehene Luft von der Luftleiteinrichtung (24) dem Außenbereich (28) oder dem Innenbereich (26) des Kondensators (22) zuführbar ist, und wobei zumindest ein Teil der dem Außenbereich (28) bzw. dem Innenbereich (26) zugeführten Luft durch die Kanäle (50, 52) hindurch in den Innenbereich (26) bzw. Außenbereich (28) des Hohlzylinders förderbar und davon abführbar ist.

2. Vorrichtung nach Anspruch 1, **dadurch gekennzeichnet, dass** der Kondensator (22) im Wesentlichen eine längliche Form aufweist, wobei der Kondensator (22) Kanäle (50, 52) aufweist, welche sich in Richtung der Längsachse oder einer Querachse des Kondensators (22) erstrecken, wobei durch die Kanäle (50, 52) Luft leitbar ist.

3. Vorrichtung nach Anspruch 2, **dadurch gekennzeichnet, dass** der Kondensator (22) in Richtung seiner Längsachse eine gekrümmte Form aufweist.

4. Vorrichtung nach einem der Ansprüche 1 bis 3, **dadurch gekennzeichnet, dass** der Kondensator (22) in einem zumindest abschnittsweise im Wesentlichen zylindrisch, quaderförmig oder prismatisch ausgebildeten Gehäuse (24) angeordnet ist, welches vorzugsweise einen Teil der Luftleiteinrichtung (24) bildet.

5. Vorrichtung nach Anspruch 4, **dadurch gekennzeichnet, dass** das Gehäuse (24) eine Gehäuselängsachse aufweist, wobei der Kondensator (22) in dem Gehäuse (24) derart angeordnet ist, dass die Gehäuselängsachse und die Längsachse des Kondensators (22) einen Winkel einschließen, der kleiner als 90 Grad ist.

6. Vorrichtung nach Anspruch 4 oder 5, **dadurch gekennzeichnet, dass** der Kondensator (22) im Wesentlichen in horizontaler Richtung oder quer zu seiner Längsachse von Luft durchströmbar ist.

7. Vorrichtung nach einem der Ansprüche 1 bis 6, **dadurch gekennzeichnet, dass** eine Lüftereinrichtung (30, 36) vorgesehen ist, welche vorzugsweise von der Umgebung kommende Luft ansaugt und mittels der Luftleiteinrichtung (24) zum Kondensator (22) befördert.

8. Vorrichtung nach Anspruch 7, **dadurch gekennzeichnet, dass** die Lüftereinrichtung (30, 36) stromaufwärts und/oder an einem oberen Ende des im Wesentlichen vertikal angeordneten Kondensators (22) angeordnet ist.

9. Vorrichtung nach einem der Ansprüche 4 bis 8, **dadurch gekennzeichnet, dass** das Gehäuse (24) zu Reinigungs- und/oder Wartungszwecken zumindest abschnittsweise zwei- oder mehrgeteilt, sowie sich öffnen lassend und verschließbar ausgebildet ist.

10. Vorrichtung nach Anspruch 9, **dadurch gekennzeichnet, dass** die Zweiteilung entlang der Gehäuselängsachse vorgesehen ist.

11. Vorrichtung nach Anspruch 9 oder 10, **dadurch gekennzeichnet, dass** an einem Gehäuseteil (48) mindestens eine Lüftereinrichtung (30, 36) und an einem anderen Gehäuseteil mindestens ein Kondensator (22) befestigt ist.

12. Vorrichtung nach einem der Ansprüche 9 bis 11, **dadurch gekennzeichnet, dass** der mindestens einen Lüftereinrichtung (36) stromabwärts ein Kondensator (22) nachgeordnet ist.

13. Vorrichtung nach einem der Ansprüche 9 bis 12, **dadurch gekennzeichnet, dass** mehrere Lüftereinrichtungen (36) und mehrere Kondensatoren (22) vorgesehen sind, welche alternierend hintereinander angeordnet sind.

14. Vorrichtung nach einem der Ansprüche 1 bis 13, **dadurch gekennzeichnet, dass** die Lüftereinrichtung elektrisch antreibbar ist und/oder dass eine Filtereinrichtung (38) vorgesehen ist, mit welcher verunreinigte Umgebungsluft zumindest teilweise reinigbar ist, wobei die Filtereinrichtung (38) vorzugsweise Turbulatorröhrchen aufweist.

15. Fahrzeug, insbesondere landwirtschaftliches oder industrielles Nutzfahrzeug, **gekennzeichnet durch** eine Vorrichtung zum Kühlen von Luft für einen dem Fahrzeug (10) zugeordneten Raum (18) nach einem der Ansprüche 1 bis 14.

## Claims

1. Device for the cooling of air for a space assigned to a vehicle, in particular a cab for an agricultural or industrial utility vehicle, with a compressor (20) and/or an evaporator (16), with a condenser (22), with an air guide arrangement (24) and with connecting lines (23), the condenser (22) being connectable to the compressor (20) or to the evaporator (16) with the aid of the connecting lines (23), air for cooling the condenser (22) being deliverable to the condenser (22) by means of the air guide arrangement (24), the condenser (22) being arranged in spatial proximity to the space (18), the condenser (22) having at least partially an essentially prismatic, parallelepipedal or cylindrical form, and the condenser (22) being arranged essentially vertically or, with respect to its longitudinal axis, at an angle to the vertical of less than 45 degrees, **characterized in that** the condenser (22) has at least partially essentially a hollow-cylindrical form with a plurality of ducts (50, 52) running in the radial direction, the ducts (50, 52) connecting an inner region (26) of the hollow-cylindrical condenser (22) to an outer region (28) of the hollow-cylindrical condenser (22), the air provided for cooling the condenser (22) being feedable to the outer region (28) or the inner region (26) of the condenser (22), and at least part of the air fed to the outer region (28) or to the inner region (26) being conveyable through the ducts (50, 52) into the inner region (26) or outer region (28) of the hollow cylinder and being dischargeable therefrom.

2. Device according to Claim 1, **characterized in that** the condenser (22) has essentially an elongate form, the condenser (22) having ducts (50, 52) which extend in the direction of the longitudinal axis or of a transverse axis of the condenser (22), air being conductable through the ducts (50, 52).

3. Device according to Claim 2, **characterized in that** the condenser (22) has a curved form in the direction of its longitudinal axis.

4. Device according to one of Claims 1 to 3, **characterized in that** the condenser (22) is arranged in an at least partially essentially cylindrically, parallelepipedally or prismatically designed housing (24) which preferably forms part of the air guide arrangement (24).

5. Device according to Claim 4, **characterized in that** the housing (24) has a housing longitudinal axis, the condenser (22) being arranged in the housing (24) in such a way that the housing longitudinal axis and the longitudinal axis of the condenser (22) form an angle which is less than 90 degrees.

6. Device according to Claim 4 or 5, **characterized in that** the air is capable of flowing through the condenser (22) essentially in the horizontal direction or transversely with respect to its longitudinal axis.

7. Device according to one of Claims 1 to 6, **characterized in that** a fan arrangement (30, 36) is provided, which preferably sucks in air coming from the surroundings and which conveys it to the condenser (22) by means of the air guide arrangement (24).

8. Device according to Claim 7, **characterized in that** the fan arrangement (30, 36) is arranged upstream and/or at an upper end of the essentially vertically arranged condenser (22).

9. Device according to one of Claims 4 to 8, **characterized in that**, for cleaning and/or maintenance purposes, the housing (24) is designed to be at least partially divided into two or more parts and so as to be openable and closeable.

10. Device according to Claim 9, **characterized in that** the division into two parts is provided along the housing longitudinal axis.

11. Device according to Claim 9 or 10, **characterized in that** at least one fan arrangement (30, 36) is fastened to one housing part (48) and at least one condenser (22) is fastened to another housing part.

12. Device according to one of Claims 9 to 11, **characterized in that** the at least one fan arrangement (36) is followed downstream by a condenser (22).

13. Device according to one of Claims 9 to 12, **characterized in that** a plurality of fan arrangements (36) and a plurality of condensers (22) are provided, which are arranged alternately one behind the other.

14. Device according to one of Claims 1 to 13, **characterized in that** the fan arrangement is driveable electrically, and/or **in that** a filter arrangement (38) is provided, by means of which contaminated ambient air is at least partially purifyable, the filter arrangement (38) preferably having small turbulator tubes.

15. Vehicle, in particular agricultural or industrial utility vehicle, **characterized by** the device for the cooling of air for a space (18) assigned to the vehicle (10) according to one of Claims 1 to 14.

## Revendications

1. Dispositif pour le refroidissement de l'air d'un espace associé à un véhicule, notamment d'une cabine d'un véhicule utilitaire agricole ou industriel, comprenant un compresseur (20) et/ou un évaporateur (16), un condenseur (22), un dispositif de guidage d'air (24) et des conduites de connexion (23), le condenseur (22) pouvant être connecté au compresseur (20) ou à l'évaporateur (16) à l'aide des conduites de connexion (23), de l'air pour refroidir le condenseur (22) pouvant être acheminé au condenseur (22) par le biais du dispositif de guidage d'air (24), le condenseur (22) étant disposé à proximité spatiale de l'espace (18), le condenseur (22) présentant au moins en partie une forme essentiellement prismatique, parallélépipédique ou cylindrique, et le condenseur (22) étant disposé essentiellement verticalement ou par rapport à son axe longitudinal suivant un angle inférieur à 45 degrés par rapport à la verticale, **caractérisé en ce que** le condenseur (22) présente au moins en partie essentiellement une forme cylindrique creuse avec plusieurs canaux (50, 52) s'étendant dans la direction radiale, les canaux (50, 52) reliant une région interne (26) du condenseur cylindrique creux (22) à une région externe (28) du condenseur cylindrique creux (22), l'air prévu pour refroidir le condenseur (22) pouvant être acheminé du dispositif de guidage d'air (24) à la région externe (28) ou à la région interne (26) du condenseur (22), et au moins une partie de l'air acheminé à la région externe (28) ou à la région interne (26) pouvant être transportée par les canaux (50, 52) dans la région interne (26) ou la région externe (28) du cylindre creux et pouvant en être évacuée.

2. Dispositif selon la revendication 1, **caractérisé en ce que** le condenseur (22) présente essentiellement une forme allongée, le condenseur (22) présentant des canaux (50, 52) qui s'étendent dans la direction de l'axe longitudinal ou d'un axe transversal du condenseur (22), de l'air pouvant être guidé à travers les canaux (50, 52).

3. Dispositif selon la revendication 2, **caractérisé en ce que** le condenseur (22) présente une forme courbe dans la direction de son axe longitudinal.

4. Dispositif selon l'une quelconque des revendications 1 à 3, **caractérisé en ce que** le condenseur (22) est disposé dans un boîtier (24) réalisé au moins en partie sous forme essentiellement cylindrique, parallélépipédique ou prismatique, qui forme de préférence une partie du dispositif de guidage d'air (24).

5. Dispositif selon la revendication 4, **caractérisé en ce que** le boîtier (24) présente un axe longitudinal de boîtier, le condenseur (22) étant disposé dans le boîtier (24) de telle sorte que l'axe longitudinal de boîtier et l'axe longitudinale du condenseur (22) forment un angle qui est inférieur à 90 degrés.

6. Dispositif selon la revendication 4 ou 5, **caractérisé en ce que** le condenseur (22) peut être parcouru par l'air essentiellement dans la direction horizontale ou transversalement à son axe longitudinal.

7. Dispositif selon l'une quelconque des revendications 1 à 6, **caractérisé en ce qu'**un dispositif de ventilateur (30, 36) est prévu, lequel aspire de préférence l'air provenant de l'environnement et le transporte au moyen du dispositif de guidage d'air (24) jusqu'au condenseur (22).

8. Dispositif selon la revendication 7, **caractérisé en ce que** le dispositif de ventilateur (30, 36) est disposé en amont et/ou à une extrémité supérieure du condenseur (22) disposé essentiellement verticalement.

9. Dispositif selon l'une quelconque des revendications 4 à 8, **caractérisé en ce que** le boîtier (24) est divisé au moins en partie en deux ou plusieurs parties, pour des besoins de nettoyage et/ou d'entretien, et est réalisé de manière à pouvoir être ouvert et fermé.

10. Dispositif selon la revendication 9, **caractérisé en ce que** la séparation en deux est prévue le long de l'axe longitudinal du boîtier.

11. Dispositif selon la revendication 9 ou 10, **caractérisé en ce qu'**au moins un dispositif de ventilateur (30, 36) est fixé sur une partie du boîtier (48) et au moins un condenseur (22) est fixé sur une autre partie du boîtier.

12. Dispositif selon l'une quelconque des revendications 9 à 11, **caractérisé en ce que** l'au moins un dispositif de ventilateur (36) est monté en aval d'un condenseur (22).

13. Dispositif selon l'une quelconque des revendications 9 à 12, **caractérisé en ce que** plusieurs dispositifs de ventilateur (36) et plusieurs condenseurs (22) sont prévus, lesquels sont disposés en alternance les uns derrière les autres.

14. Dispositif selon l'une quelconque des revendications 1 à 13, **caractérisé en ce que** le dispositif de ventilateur peut être entraîné de manière électrique, et/ou **en ce qu'**un dispositif de filtre (38) est prévu, avec lequel l'air ambiant non purifié peut être purifié au moins en partie, le dispositif de filtre (38) présentant de préférence des petits tubes générateurs de turbulences.

15. Véhicule, en particulier véhicule utilitaire agricole ou industriel, **caractérisé par** un dispositif pour refroidir de l'air pour un espace (18) associé au véhicule (10) selon l'une quelconque des revendications 1 à 14.
